# EUROPEAN PATENT SPECIFICATION

(11) **EP 1 139 795 B1**
(45) Date of publication and mention of the grant of the patent: **30.03.2005**
(21) Application number: 99955932.1
(22) Date of filing: 27.10.1999
(51) Int. Cl.: A23L 1/30

(54) **FOOD COMPOSITION CONTAINING BETA CAROTENE AND LYCOPENE**
NAHRUNGSMITTELZUSAMMENSETZUNG ENTHALTEND BETA CAROTENE UND LYCOPENE
COMPOSITION ALIMENTAIRE CONTENANT DU BETA CAROTENE ET DU LYCOPENE

(30) Priority: 22.12.1998 EP 98204419
(43) Date of publication of application: 10.10.2001
(73) Proprietor: UNILEVER N.V., 3013 AL Rotterdam (NL); UNILEVER PLC, London EC4P 4BQ (GB)
(72) Inventor: DE BOER, Bernardus, Unilever Research Vlaardingen, 3133 AT Vlaardingen (NL); VAN AMERONGEN, Marnix, Unilever Res. Vlaardinge, 3133 AT Vlaardingen (NL)
(74) Representative: Van Velzen, Maaike Mathilde
(86) International application number: PCT/EP1999/008309
(87) International publication number: WO 2000/036935

(56) References cited:
- EP-A- 0 897 671
- WO-A-98/13023
- WO-A-98/28990
- DATABASE FSTA [Online] INTERNATIONAL FOOD INFORMATION SERVICE (IFIS), FRANFURT/MAIN, DE an 95-1-02-j0055, WHITAKER B D: "Lipid changes in mature-green tomatoes during ripening, during chilling, and after rewarming subsequent to chilling." XP002104637 & JOURNAL OF THE AMERICAN SOCIETY FOR HORTICULTURAL SCIENCE, vol. 119, no. 5, 1994, pages 994-999, Hort. Crops Quality Lab., Beltsville Agric. Res. Cent., ARS, USDA, Beltsville, MD 20705-2350, USA
- DATABASE FSTA [Online] INTERNATIONAL FOOD INFORMATION SERVICE (IFIS), FRANFURT/MAIN, DE an 96-1-07-j129, WHITAKER B D: "Lipid changes in mature-green bell pepper fruit during chilling at 2C and after transfer to 20C subsequent to chilling." XP002104636 & PHYSIOLOGIA PLANTARUM, vol. 93, no. 4, 1995, pages 683-688, Hort. Crops Quality Lab., Beltsville Agric. Res. Cent., ARS, USDA, Beltsville, MD 20705-2350, USA

## Description

### Field of the invention

The present invention relates to an edible compositon containing both (plant) sterols (and/or sterol-containing compounds) as well as carotenoids.

### Background of the invention

Various plant sterols and plant sterol derived compounds have (when consumed in the right form) a known and well-documented effect on blood cholesterol level. Among these are compounds like β-sitosterol, the hydrogenated form thereof (β-sitostanol), as well as esterified forms thereof. Sterols have been reported to be capable of lowering the level of blood cholesterol (Pollak & Kritchevsky, Monographs in Atherosclerosis, 1981). In particular, the group of 4-desmethylsterols, 4-monomethylsterols, their hydrogenated forms and fatty acid esters have been reported to have a beneficial effect on blood cholesterol level, in particular on LDL-cholesterol.

Compounds belonging to the class of carotenoids are best known for their role as dietary antioxidants, although other potentially protective mechanisms for this group of compounds have been identified e.g. provitamin A activity, role in immunity and cell-cell communication. About 600 carotenoids occur in nature of which the six major ones in the diet are β- carotene, lycopene, lutein, β-cryptoxanthin, α-carotene and zeaxanthin. Although no thorough, proven, scientific base for claiming a direct relation between cause and effect of the carotenoid intake and disease incidence has been presented thusfar, inverse associations between carotenoid intake or status and disease incidence have been found.

Hence, when it is desired to achieve a lowering of blood cholesterol level, an increased intake of the sterol compounds as defined above may be desired. However, a disadvantage with the use of such compounds is that the absorption of lipophilic compounds, such as β-carotene and lycopene may decrease. It has been reported that diets with an effective amount of cholesterol-lowering (plant) sterol did result in measurable decrease of lipophilic carotenoids in blood.

It is also desired to provide an edible composition that can be incorporated in a single meal which can both supply (plant)sterols and/or (plant)stanols or derivatives, as well as (one or more of) carotenoids. Preferably, in such a way that a net increase in blood carotenoid level is obtained together with an intake of an effective amount of (plant)sterols, (plant)stanols, or derivatives of such compounds. It would be even more preferred if such composition can be part of the main (hot) meal.

WO 98/13023 discloses foodstuffs containing microcrystalline plant sterols. Preferably, the foodstuff is a spread based on a combination of sweetening agent, a microcrystalline plant sterol and a suitable berry or fruit. Most of the fruits diclosed do not contain carotenoids in any significant amounts, only apricots do contain β-carotene.

### Summary of the invention

The current invention provides a solution to such problems, by which the blood cholesterol effect of the sterols can be obtained together with a maintained (i.e. no decreased) carotenoid status, preferably with an increased carotenoid status, of carotenoids such as β-carotene, α-carotene, lycopene, lutein, β-cryptoxanthin or mixtures thereof (as measured e.g. by a post-prandial clinical trial by e.g. measuring 1-6 hours after intake). More preferably, the blood cholesterol effect of the sterols can be obtained together with an increased bioavailability of such carotenoids.

It has now been found that the above may be achieved by an edible composition comprising (phyto) sterols or derivatives thereof in an amount of at least 0.5 (g) (preferably at least 1.5 (g), more preferably at least 2 (g)) per serving, further comprising at least one carotenoid in an amount of at least 1 (mg) (preferably at least 2 (mg)) per serving, and wherein at least 20% wt of the carotenoid(s) is in another phase than the majority of the (phyto) sterols or derivatives thereof. Preferably, the majority of the carotenoids is in another phase than the majority of the (phyto) sterols or derivatives thereof. As an example of "another phase", part of the carotenoids may be present in the compositions according to the invention in an extended water phase, e.g. in particulates of vegetable origin, the sterols being present as (part of) a fat phase, e.g. dissolved in the fat, or emulsified in the fat phase. "Majority of ..." in this respect is herein to be understood as "at least 50% by weight of the total amount of ... in the composition per serving". Although the composition according to the invention may contain one (type of) carotenoid (e.g. lycopene) it is preferred that the compositions according to the invention contain more than one (type of) carotenoid.

In the above composition, the carotenoids include preferably β-carotene, lycopene, lutein, β-cryptoxanthin, α-carotene, zeaxanthin or mixtures thereof, as these are among the more hydrophobic carotenoids (with β-carotene and lycopene being most lipophilic). The effect on bioavailability of the present invention is (because of the relative lipophilic character) expected to be most distinct on β-carotene and lycopene. In the compositions according to the invention the presence of β-carotene and lycopene is in weight ratio of β-carotene:lycopene of between 1:20 and 1:0.1, more preferably between 1:10 and 1:0.2. It is also preferred that at least the majority of the carotenoids in the compositions according to the invention are β-carotene, lycopene or mixtures thereof.

A convenient way to achieve the desired amount of carotenoids is present in another phase, is to prepare a composition wherein at least 20% wt (preferably at least 50% wt%) of the total amount of carotenoids is included in the composition in the form of (partly broken up) chromoplasts and/or chloroplasts. Chromoplasts and chloroplasts are microstructures that can be found in cells of vegetable matter by nature. Chromo- and/or chloroplasts of a number of fruit and vegetable species contain carotenoids, in various quantities and compostions. In particular tomatoes are rich in lycopene (predominatly in red tomatoes) and β-carotene (predominantly in orange tomatoes), located to a large extent in chromoplasts.
Another good source of β-carotene is carrots.

The above can be achieved conveniently if at least the majority of the carotenoids are present in intact or only partly disrupted chromoplasts or chloroplasts, while at the same time tissue structures of vegetable matter are still relatively intact i.e. recognizable fruit or vegetable particulates, whole cells containing chromo- and/or chloroplasts. This can be achieved by product formulations containing ingredients such as tomatoes (red, yellow or orange), peppers (including sweet peppers in colors red, yellow, orange, red (hot) peppers), water mellon, carrots, pink grapefruit, or other good sources of (particularly but not exclusively) the hydrophobic carotenoids β-carotene and lycopene. It is most preferred if the compositions according to the invention comprise chunks or pieces of said fruit and vegetables.

Preferably, the content of β-carotene and/or lycopene, in the presence of plant sterols (or derivatives thereof), in the compositions according to the invention is such that a significant (i.e. having a statistical significance) absorption of these carotenoids can be shown. This can be determined by a so called post-prandial clinical trial, in which chylomicron-rich fractions - that are isolated from blood samples taken up to 8 or 12 hours after consumption of a meal - are analysed for their carotenoid contents.

Where in this application (plant) sterols are mentioned, phytosterols, phytostanols, or mixtures thereof are meant. Hence, the term (plant) sterols in this application refers to 4-desmethylsterols, 4-monomethylsterols and 4,4'-dimethylsterols, their stanol equivalents, and mixtures thereof in any combination possible.
Where in this application, reference is made to (plant) sterol esters, fatty acid esters of such sterols/stanols are meant.

### Detailed description of the invention

Preferably, the amount of (plant) sterols and carotenoids in the composition is such that levels of carotenoids in the body are increased and the level of (serum) blood cholesterol, and LDL-cholesterol in particular, are decreased, when such composition is ingested regularly, for a period of at least 14 days.

As various vegetables and fruits like tomatoes are suitable sources of carotenoid-containing chrono- and/or chloroplasts, these are preferred sources for the carotenoids. Following this, a composition according to the invention may be a food composition comprising tomatoes, such as e.g. an Italian-style sauce to go with pasta, with added to the sauce (phyto) sterols or derivatives thereof in such an amount that per serving at least 0.5 (g), preferably at least 1.5 (g) of (phyto)sterol or derivative thereof is ingested. Such a sauce may be anything from a very smooth, more or less homogeneous mixture, to a thick sauce containing chunks of tomato or other fruit or vegetable, depending on desired end result and processing. Even more preferred in the above are levels of at least 2 or even 3 (g) (phyto)sterol or derivative thereof (per serving).

The size and weight of a serving will depend on the type of the food product, but will be about the size/weight of that food product as is usually consumed by the average adult person. For Italian-type tomato sauces for pasta dishes such a serving may be about 100-150 gram.

Also depending on processing, at least part of the carotenoid-containing chromoplasts and/or chloroplasts is presumably present as a part of plant cells.

Also suitable to provide at least part of the composition according to the invention are (besides various colored tomatoes): sweet peppers (red, yellow or orange), red (hot) peppers, water mellon, carrots, pink grapefruit, or other fruit or vegetable containing carotenoids. The compositions according to the invention may comprise from 10-99% by weight of these fruit or vegetables. Also, extracts of these fruit and vegetables may be used to provide such carotenoids. In that case, the compositions according to the invention may comprise less than 10% wt of the fruit and vegetables. Furthermore it is possible to use synthetic sources of carotenoids.

In processing the fruit or vegetables to make them suitable for incorporation in the compositions according to the invention a temperature treatment may be applied (besides other processing steps). The carotenoid sources may be heat-treated in order to achieve a partial disruption of the chromo- and chloroplast structures while at the same time recognizable tissue structures are still present.

The fruit or vegetables mentioned may be subjected to pretreatment like washing, cutting, heating, cooking, etcetera, but not extensive homogenization, as this may destroy the chromo- and chloroplasts too much.

An advantage of the above is that the carotenoids that are ingested are carotenoids of natural sources which are abundantly available, such as in tomatoes. Also, the compositions according to the invention may be made in the form of e.g. standard tomato sauces for e.g. Italian-style pasta dishes, which have a universal, natural and healthy appeal. The compositions according to the invention may also be in the form of (part of) a (hot or cold) paste, puree, ketchup (catsup), soup, juice, sauce or similar product.

Additionally, the compositions according to the invention are preferably low in fat. (Fat is herein to be understood as to comprise all fatty acid triglycerides such as vegetable oils.) Preferably, the composition should contain less than 10% of fat.

The compositions according to the invention can suitably be used as part of the main (hot) meal. By main meal is meant the meal of the day that provides the largest amount of calories per day, and usually includes hot food, and is taken at the end of the day or during lunchtime.

The invention further relates to a process for preparing the compositions as described above. This can be a process for the preparation of a food product which process comprises (not necessarily in the order given) at least the steps of:
- comminuting of carotenoid-containing fruit or vegetables,
- heating the carotenoid-containing fruit or vegetables,
- mixing the carotenoid-containing fruit or vegetables with a (plant) sterol or derivative thereof.

Preferably in the above process, said carotenoid-containing fruit- or vegetables comprise tomato, capsicum (red, yellow or orange), red peppers, water mellon, carrots, pink grapefruit or mixtures thereof. Preferably, the fruit or vegetables to make up the composition according to the invention are chosen such that the weight ratio of (plant) sterols or derivatives thereof : carotenoids in the final composition is between 100:1 and 10000:1. (more preferably between 250:1 and 4000:1).

In the present invention, (phyto) sterols are herein to be understood to comprise also derivatives of these compounds, such as esters. Preferred in this respect are β-sitostanol, β-sitosterol, and esters thereof with e.g. fatty acids (to yield e.g. β-sitosteryl linoleate).

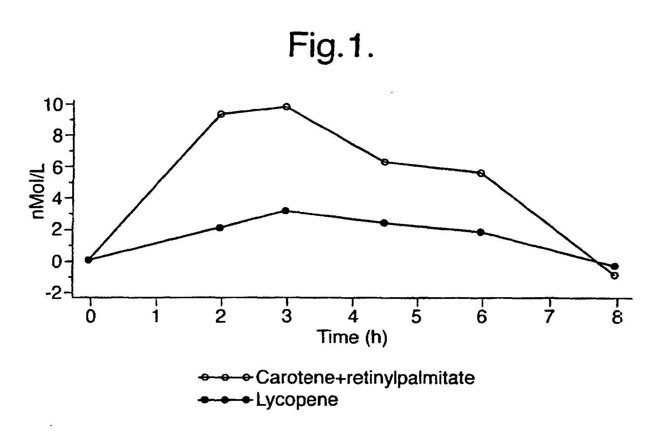

Description of figure 1: bioavailability of β-carotene and lycopene in the presence of plantsterols.

### Example

A post-prandial study was undertaken, in which 20 healthy, adult, human volunteers, 10 male, 10 female (age 30-65) were provided with an early-morning tomato-based meal, after which at regular intervals and for a period of 8 hours blood samples were taken. In the triglyceride-rich fractions (mainly consisting of chylomicrons that carry the digested fat and fat-soluble components from the intestine to the liver) of those blood samples the levels of lycopene, beta-carotene and also vitamin A were determined (using straight-phase HPLC analysis using a nucleosil cyanyl-bonded column). The levels of vitamin A (measured as retinyl palmitate) and beta-carotene can be taken together as a measure for beta-carotene uptake, as during absorption (or shortly thereafter) beta-carotene is partly converted into vitamin A. The integrated post-prandial response can then be used to estimate the bioavailability of beta-carotene and lycopene from a meal.

The meal consisted of 200 g of cooked macaroni, 130 g of chunky tomato sauce (containing more chunks of tomato flesh than most commercial tomato sauces) made of yellow, orange and super red varieties, 80 g of lean cooked ham (gammon), 20 g of white bread, and 11.6 g of sunflower oil (stripped, i.e. low in antoixidants) and 2.2 g of plansterols. The chosen level of plansterols of 2.2 g has been shown in the past to be effective, when consumed daily, in lowering the level of cholesterol in blood.

The plant sterols used have been esterified with fatty acids from sunflower oil. The plantsterol:fatty acid proportion is 3:2. The following plant sterols are present in the formula: sitosterol (45-50%), campesterol (20-30%), stigmasterol (15-25%), and brassicasterol (<5%).

The tomato sauce contained 5.2 mg of lycopene, a usual level, and 2.2 mg of beta-carotene, an unusually high level. The latter was achieved as a result of the presence of a beta-carotene-rich orange tomato variety in the tomato sauce chosen.

The day preceding the test day the test subjects were asked not to consume foods rich in carotenoids and vitamin A (no vegetables or fruit rich in carotenoids, tomato products, liver products). A deep frozen main meal, low in carotenoids and vitamin A was provided.

On the test day, the meal as above described was consumed between 7.15-8.00 hours. A lunch low in carotenoids, vitamin A, and fat was provided 4.5 hours after the test meal.

### Results:

As shown in figure 1, the chunky pasta-sauce based meal with the chosen carotenoid/plant-sterol ratio resulted in a clear post-prandial response of beta-carotene and lycopene. In this graph, the level of carotenoids as measured just before the meal, was taken as zero. This example indicates that this meal, in the presence of 2.2 g of plansterols, can contribute positively to the carotenoid status in the blood (at least for lycopene and beta-carotene).

## Claims

1. Edible composition comprising phytostanols, phytosterols, or mixtures thereof or derivatives thereof in an amount of at least 0.5 (g) per 100-150 (g), further comprising carotenoids in an amount of at least 1 (mg) per 100-150 (g), and wherein at least 20 wt of the carotenoids is in another phase than at least 50% wt of the total amount of the sterols present, and wherein said carotenoids comprise β-carotene and lycopene in a ratio of between 1:20 and 1:0.2.

2. Composition according to claim 1, wherein the majority of the carotenoids (at least 50% wt) is in another phase than at least 50% wt of the total amount of the sterols.

3. Composition according to claim 1 or 2, comprising sterols in an amount of at least 1.5 (g) per serving.

4. Composition according to claim 1-3, comprising carotenoids in an amount of at least 2 (mg).

5. Composition according to claim 1-4, wherein the carotenoids are selected from the group consisting of α-carotene, β-carotene, lycopene or mixtures thereof.

6. Composition according to claim 1-5, wherein the sterols comprise phytosterols.

7. Composition according to claim 1-6, wherein at least 20% wt of the carotenoids is present in the form of chromoplasts and/or chloroplasts and/or partly broken up chromoplasts and/or chloroplasts.

8. Composition according to claim 7, wherein at least 50% wt of the carotenoids is present in the form of chromoplasts and/or chloroplasts.

9. Composition according to claim 7 or 8, wherein at least part of the total amount of chromoplasts and/or chloroplasts and/or partly broken up chromoplasts and/or chloroplasts in the composition are present as a part of plant cells and/or intact plant cells.

10. Composition according to claim 1-9, wherein at least part of the total amount of carotenoids present in the composition are obtained from tomato, sweet peppers, non-sweet peppers, red peppers, yellow peppers, orange peppers, water melon, carrots, pink grapefruit, or other fruit or vegetable containing carotenoids.

11. Composition according to claim 10, wherein at least part of the carotenoid-containing fruit or vegetable has been subjected to heat treatment at temperatures above 70°C.

12. Composition according to claim 1-11, which comprises processed tomato, capsicum, red peppers, water melon, carrots, or other fruit or vegetables or extracts thereof containing carotenoids, in an amount of 10-99%, based on fresh weight.

13. Composition according to claim 1-12, in the form of a sauce, paste, puree, ketchup (catsup), soup, juice, or similar product.

14. Main meal, comprising the composition according to claim 1-13.

15. Process for the preparation of a food product as defined in any one of claims 1 to 14 which process comprises, not necessarily in the order given, at least the steps of:
- comminuting to pieces of carotenoid-containing fruit or vegetables,
- heating the carotenoid-containing fruit or vegetables,
- mixing the carotenoid-containing fruit or vegetables with a sterol, plant sterol or derivative thereof.

16. Process according to claim 15, wherein the carotenoid containing fruit or vegetables comprise tomato, sweet peppers, non-sweet peppers, red peppers, yellow peppers, orange peppers, water melon, carrots, pink grapefruit, or extracts or mixtures thereof.

17. Process as claimed in claim 15-16, wherein the amount of carotenoid-containing fruit or vegetable are chosen such that the weight ratio of sterols, plant sterols or derivatives thereof: carotenoids in the final composition is between 100:1 and 10000:1.

## Patentansprüche

1. Essbare Zusammensetzung, die Phytostanole, Phytosterole oder Gemische davon oder Derivate davon in einer Menge von wenigstens 0,5 (g) pro 100-150 (g) umfasst, außerdem Carotinoide in einer Menge von wenigstens 1 (mg) pro 100-150 (g) umfasst und wobei mindestens 20 Gew.-% der Carotinoide in einer anderen Phase als mindestens 50 Gew.-% der Gesamtmenge der vorhandenen Sterole sind und wobei die Carotinoide β-Carotin und Lycopin in einem Verhältnis zwischen 1:20 und 1:0,2 umfassen.

2. Zusammensetzung nach Anspruch 1, wobei die Mehrheit der Carotinoide (wenigstens 50 Gew.-%) in einer anderen Phase als mindestens 50 Gew.-% der Gesamtmenge der Sterole sind.

3. Zusammensetzung nach Anspruch 1 oder Anspruch 2, die Sterole in einer Menge von mindestens 1,5 (g) pro Portion umfasst.

4. Zusammensetzung nach den Ansprüchen 1 bis 3, die Carotinoide in einer Menge von mindestens 2 (mg) umfasst.

5. Zusammensetzung nach den Ansprüchen 1 bis 4, wobei die Carotinoide aus der Gruppe, bestehend aus α-Carotin, β-Carotin, Lycopin oder Gemischen davon, ausgewählt ist.

6. Zusammensetzung nach Anspruch 1 bis 5, wobei die Sterole Phytosterole umfassen.

7. Zusammensetzung nach Anspruch 1 bis 6, wobei mindestens 20 Gew.-% der Carotinoide in Form von Chromoplasten und/oder Chloroplasten und/oder teilweise aufgebrochenen Chromoplasten und/oder Chloroplasten vorliegen.

8. Zusammensetzung nach Anspruch 7, wobei mindestens 50 Gew.-% der Carotinoide in Form von Chromoplasten und/oder Chloroplasten vorliegen.

9. Zusammensetzung nach Anspruch 7 oder 8, wobei mindestens ein Teil der Gesamtmenge an Chromoplasten und/oder Chloroplasten und/oder teilweise aufgebrochenen Chromoplasten und/oder Chloroplasten in der Zusammensetzung als Teil von Pflanzenzellen und/oder intakten Pflanzenzellen vorliegt.

10. Zusammensetzung nach Anspruch 1 bis 9, wobei mindestens ein Teil der Gesamtmenge an Carotinoiden, die in der Zusammensetzung vorliegen, aus Tomaten, süßem Paprika, nicht süßem Paprika, rotem Paprika, gelbem Paprika, orangefarbenem Paprika, Wassermelone, Karotten, pinkfarbener Grapefruit oder anderen Früchten oder Gemüsen, die Carotinoide enthalten, erhalten wird.

11. Zusammensetzung nach Anspruch 10, wobei mindestens ein Teil der Carotinoid-enthaltenden Frucht oder des Carotinoid-enthaltenden Gemüses einer Wärmebehandlung bei Temperaturen über 70°C unterworfen wurde.

12. Zusammensetzung nach Anspruch 1 bis 11, die verarbeitete Tomaten, verarbeitetes Capsicum, verarbeitete rote Paprika, verarbeitete Wassermelone, verarbeitete Karotten oder andere verarbeitete Früchte oder Gemüse oder Extrakte davon, die Carotinoide enthalten, in einer Menge von 10 bis 99 %, bezogen auf das Frischgewicht, umfasst.

13. Zusammensetzung nach Anspruch 1 bis 12 in Form einer Sauce, einer Paste, eines Pürees, eines Ketchups (catsup), einer Suppe, eines Saftes oder eines ähnlichen Produktes.

14. Hauptmahlzeit, umfassend die Zusammensetzung nach Anspruch 1 bis 13.

15. Verfahren zur Herstellung eines Lebensmittelproduktes, wie es in einem der Ansprüche 1 bis 14 definiert ist, wobei das Verfahren, nicht notwendigerweise in der angegebenen Reihenfolge, zumindest die folgenden Schritte umfasst:
- Zerkleinern von Carotinoid-enthaltenden Früchten oder Gemüsen zu Stücken,
- Erwärmen der Carotinoid-enthaltenden Früchte oder Gemüse,
- Vermischen der Carotinoid-enthaltenden Früchte oder Gemüse mit einem Sterol, Pflanzensterol oder Derivat davon.

16. Verfahren nach Anspruch 15, wobei die Carotinoid-enthaltenden Früchte oder Gemüse Tomate, süßem Paprika, nicht süßem Paprika, rote Paprika, gelbe Paprika, orangefarbener Paprika, Wassermelone, Karotten, pinkfarbene Grapefruit oder Extrakte oder Gemische davon, umfassen.

17. Verfahren nach Anspruch 15 bis 16, wobei die Menge an Carotinoid-enthaltenden Früchten oder Gemüsen so gewählt ist, dass das Gewichtsverhältnis von Sterolen, Pflanzensterolen oder Derivaten davon: Carotinoiden in der End-Zusammensetzung zwischen 100:1 und 10.000:1 liegt.

## Revendications

1. Composition comestible comprenant des phytosténols, des phytostérols, ou mélanges de ceux-ci, ou dérivés de ceux-ci en une quantité d'au moins 0,5 (g) pour 100 à 150 (g), comprenant en outre des caroténoïdes en une quantité d'au moins 1 (mg) pour 100 à 150 (g), et dans laquelle au moins 20 % en poids des caroténoïdes se trouvent dans une autre phase que la phase constituée d'au moins 50 % en poids de la quantité totale des stérols présents, et dans laquelle lesdits caroténoïdes comprennent du β-carotène et du lycopène en un rapport compris entre 1:20 et 1:0,2.

2. Composition selon la revendication 1, dans laquelle la majorité des caroténoïdes (au moins 50 % en poids) se trouve dans une autre phase que la phase constituée d'au moins 50 % en poids de la quantité totale des stérols.

3. Composition selon la revendication 1 ou 2, comprenant des stérols en une quantité d'au moins 1,5 (g) par portion.

4. Composition selon la revendication 1 à 3, comprenant des caroténoïdes en une quantité d'au moins 2 (mg).

5. Composition selon la revendication 1 à 4, dans laquelle les caroténoïdes sont choisis à partir du groupe constitué d'α-carotène, de β-carotène, de lycopène ou mélanges de ceux-ci.

6. Composition selon la revendication 1 à 5, dans laquelle les stérols comprennent les phytostérols.

7. Composition selon la revendication 1 à 6, dans laquelle au moins 20 % en poids des caroténoïdes sont présents sous forme de chromoplastes et/ou de chloroplastes et/ou de chromoplastes et/ou de chloroplastes partiellement désintégrés.

8. Composition selon la revendication 7, dans laquelle au moins 50 % en poids des caroténoïdes sont présents sous forme de chromoplastes et/ou de chloroplastes.

9. Composition selon la revendication 7 ou 8, dans laquelle au moins une partie de la quantité totale des chromoplastes et/ou des chloroplastes et/ou de chromoplastes et/ou de chloroplastes partiellement désintégrés de la composition est présente en tant que cellules végétales partielles et/ou de cellules végétales intactes.

10. Composition selon la revendication 1 à 9, dans laquelle au moins une partie de la quantité totale des caroténoïdes présents dans la composition est obtenue à partir de la tomate, des piments doux, des piments forts, des piments rouges, des piments jaunes, des piments oranges, de la pastèque, des carottes, du pamplemousse rose, ou autres fruits ou légumes contenant des caroténoïdes.

11. Composition selon la revendication 10, dans laquelle au moins une partie des fruits ou légumes contenant des caroténoïdes a été soumise à un traitement thermique à une température dépassant 70°.

12. Composition selon la revendication 1 à 11, qui comprend de la tomate, du *Capsicum,* des poivrons rouges, de la pastèque, des carottes transformés, ou autres fruits ou légumes ou extraits de fruits ou légumes contenant des caroténoïdes, en une quantité de 10 à 99 %, par rapport au poids frais.

13. Composition selon la revendication 1 à 12, sous la forme d'une sauce, d'une pâte, d'une purée, de ketchup, d'une soupe, d'un jus ou d'un produit semblable.

14. Plat principal, comprenant la composition selon la revendication 1 à 13.

15. Processus de préparation d'un produit alimentaire tel que défini dans l'une quelconque des revendications 1 à 14 lequel processus comprend, pas nécessairement dans l'ordre indiqué, au moins les étapes consistant à :
- pulvériser les fruits ou légumes contenant les caroténoïdes,
- chauffer les fruits ou légumes contenant les caroténoïdes,
- mélanger les fruits ou légumes contenant les caroténoïdes avec un stérol, un stérol végétal ou dérivé de celui-ci.

16. Processus selon la revendication 15, dans lequel les fruits ou légumes contenant les caroténoïdes comprennent de la tomate, des piments doux, des piments forts, des piments rouges, des piments jaunes, des piments oranges, de la pastèque, des carottes, du pamplemousse rose, ou extraits ou mélanges de ceux-ci.

17. Processus selon la revendication 15 ou 16, dans lequel la quantité de fruits ou légumes contenant les caroténoïdes est choisie telle que le rapport en poids des stérols, des stérols végétaux ou dérivés de ceux-ci sur les caroténoïdes dans la composition finale est compris entre 100:1 et 10000:1.
